# EUROPEAN PATENT SPECIFICATION

(11) **EP 2 328 938 B1**
(45) Date of publication and mention of the grant of the patent: **01.04.2015**
(21) Application number: 09792837.8
(22) Date of filing: 22.09.2009
(51) Int. Cl.: C08F 2/38, C08F 8/50, C08F 255/02, C08L 51/06

(54) **RADICALLY FUNCTIONALIZED OLEFIN-BASED POLYMER WITH REDUCED MOLECULAR WEIGHT CHANGE AND METHOD**
RADIKALISCH FUNKTIONALISIERTES POLYMER AUF OLEFINBASIS MIT VERRINGERTER MOLEKULARGEWICHTSÄNDERUNG UND VERFAHREN
POLYMÈRE À BASE D OLÉFINE FONCTIONNALISÉE DE MANIÈRE RADICALAIRE SUBISSANT UN CHANGEMENT DE POIDS MOLÉCULAIRE RÉDUIT ET SON PROCÉDÉ DE FABRICATION

(30) Priority: 23.09.2008 US 99366 P
(43) Date of publication of application: 08.06.2011
(73) Proprietor: Dow Global Technologies LLC, Midland, MI 48674 (US)
(72) Inventor: STOLZ-DUNN, Sandra, K., Midland MI 48640 (US)
(74) Representative: Boult Wade Tennant
(86) International application number: PCT/US2009/057814
(87) International publication number: WO 2010/036642

(56) References cited:
- WO-A-02/42368
- WO-A-03/042255
- US-A- 5 082 742
- US-A1- 2004 054 086

## Description

### BACKGROUND

The present disclosure relates to functionalized polymers, compositions, articles and methods for producing the same. In particular, the present disclosure provides a composition containing a coagent which reduces the amount of change in molecular weight for an olefin-based polymer that is radically functionalized.

A continuous challenge in polymer chemistry is the introduction of functionality into an olefin-based polymer. Catalyst compositions for propylene polymerization, for example, are not capable of incorporating polar monomers into the polymer backbone. Functionalization of an olefin-based polymer in radical melt processes typically results in changes to the polymer molecular weight. Exemplary is polypropylene which experiences gross molecular weight degradation, via β-scission, during radical functionalization reaction in a melt state or in a solution state.

US-A-2004/0054086 discloses propylene ethylene copolymers with an ethylene content between 8 and 32 mole% which have been grafted with maleic anhydride and a peroxide.

US-B-5,082,742 describes a tie-layer system suitable for combining a styrenic polymer and a polyolefin which is comprised of at least two co-reactive, functionalized polymers either in laminate contact or as a blend; the first such polymer being (a) an epoxy funtionalized styrenic polymer wherein said epoxy functional group is selected from the group consisting of glycidyl (alkyl) acrylate, allyl glycidyl ethers, vinyl glycidyl ethers and glycidyl itaconates; and the second such polymer being (b) an acid functionalized polyolefin wherein said acid functional group is selected from the group consisting of acrylic, methacrylic, vinyl benzoic, crotonic and cinnamic acids.

WO-A-02/42368 discloses a method for the production of polyolefins which are subjected to the effect of water and stabilized against visible and ultra-violet light, wherein light stabilizers are added to the polyolefin. The method is characterized in that the light stabilizer can be a cinnamic acid ester of formula:

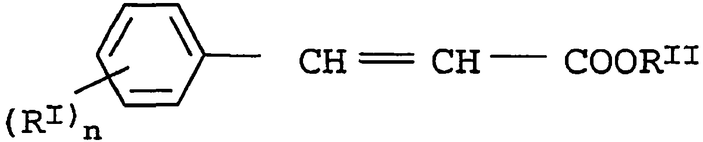

WO-A-03/042255 discloses a modified olefinic thermoplastic elastomer composition, for example a polypropylene homopolymer, formed by melt blending of said thermoplastic elastomer with a free radical generator, for example an organic peroxide and co-curative agent, for example maleic, cinnamic acids, or mixtures thereof.

Desirable would be a functionalized olefin-based polymer that exhibits a reduced molecular weight change as a result of the functionalization and a process for producing the same.

### SUMMARY

The present disclosure provides a composition which includes coagents that inhibit degradation and/or molecular weight change during radical functionalization, and related processes for degradation inhibition and/or minimizing molecular weight change utilizing the compositions. The present disclosure further provides articles containing olefin- based polymers functionalized by way of the coagent.

In an embodiment, a composition is provided. The composition includes an olefin-based polymer and a cinnamoyl derivative. The cinnamoyl derivative has the structure

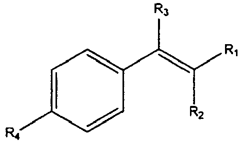

R₁ is selected from a carboxyl group, an ester group, a cyano group and an imidazolyl group. R₂ is selected from hydrogen and a cyano group. R₃ is selected from hydrogen and an alkyl group. R₄ is selected from hydrogen and a C₁-C₁₀ alkoxy group.

The olefin-based polymer is an ethylene-based polymer or a propylene-based polymer. In an embodiment, the olefin-based polymer is a propylene-based polymer.

In an embodiment, the cinnamoyl derivative is ethyl trans-4-ethoxycinnamate.

In an embodiment, the cinnamoyl derivative is ethyl trans-cinnamate.

In an embodiment, another composition is provided. The composition includes an olefin-based polymer and a cyano-acrylate compound. The cyano-acrylate compound has the formula

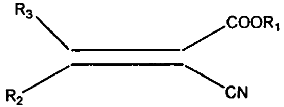

R₁ is a C₁-C₂₀ alkyl group. R₂ is selected from hydrogen, an indolyl group, and a phenyl group. R₃ is selected from hydrogen, and a phenyl group.

The olefin-based polymer can be an ethylene-based polymer or a propylene-based polymer. In an embodiment, the olefin-based polymer is a propylene-based polymer.

In an embodiment, the cyano-acrylate compound is ethyl 2-cyano-3,3 diphenylacrylate.

In an embodiment, the cyano-acrylate compound is ethyl trans-α-cyano-3-indoleacrylate.

In an embodiment, a functionalized olefin-based polymer (such as an ethylene-based polymer chain or a propylene-based polymer chain) is provided. The functionalized olefin-based polymer includes a propylene-based polymer chain, and a grafted coagent attached to the polymer chain. Bonded to the grafted coagent is a functional agent. The grafted coagent is a grafted cinnamoyl derivative.

In an embodiment, the grafted cinnamoyl derivative includes ethyl trans-4-ethoxycinnamate.

In an embodiment, the grafted cinnamoyl derivative includes ethyl trans-cinnamate.

In an embodiment, the functional agent is maleic anhydride.

In an embodiment, another functionalized olefin-based polymer (such as an ethylene-based polymer chain or a propylene-based polymer chain) is provided. The functionalized olefin-based polymer includes a propylene-based polymer chain and a grafted cyano-acrylate compound bonded to the polymer chain.

In an embodiment, the grafted cyano-acrylate compound includes ethyl 2-cyano-3,3 diphenylacrylate.

In an embodiment, the grafted cyano-acrylate compound includes ethyl trans-α-cyano-3-indoleacrylate.

In an embodiment, the functional agent is maleic anhydride.

In an embodiment, a process for producing a functionalized olefin-based polymer is provided. The process includes mixing an olefin-based polymer, a free radical initiator, a functional agent, and a coagent. The coagent is the cinnamoyl derivative and/or the cyano-acrylate composition. The process includes forming polymer radicals with the free radical initiator, and grafting, with the coagent, the functional agent to the polymer radicals. The polymer radicals are formed from the olefin-based polymer.

In an embodiment, the functional agent is maleic anhydride. The process includes forming a functional olefin-based polymer that contains from 0.1 wt % to 2.0 wt % maleic anhydride, based on the weight of the functional olefin-based polymer.

In an embodiment, the olefin-based polymer is a propylene-based polymer. The process includes reducing, with the coagent, scission reactions during the process.

In an embodiment, the process includes mixing ethyl trans-4-ethoxycinnamate with a propylene-based polymer, the free radical initiator, and the functional agent.

In an embodiment, the process includes mixing ethyl trans-cinnamate with a propylene-based polymer, the free radical initiator, and the functional agent.

In an embodiment, the present disclosure provides an object such as an article, a film, a fiber, a tie layer, and/or a sheet. The object contains or is otherwise composed of one or more of the present functionalized olefin-based polymers.

### DETAILED DESCRIPTION

Any numerical range recited herein, includes all values from the lower value and the upper value, in increments of one unit, provided that there is a separation of at least two units between any lower value and any higher value. As an example, if it is stated that a compositional, physical or other property, such as, for example, molecular weight, melt index, etc., is from 100 to 1,000, it is intended that all individual values, such as 100, 101, 102, etc., and sub ranges, such as 100 to 144, 155 to 170, 197 to 200, etc., are expressly enumerated in this specification. For ranges containing values which are less than one, or containing fractional numbers greater than one (*e.g.,* 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this application. In other words, any numerical range recited herein includes any value or subrange within the stated range. Numerical ranges have been recited, as discussed herein, in reference to density, weight percent of component, molecular weights and other properties.

In an embodiment, a composition is provided which contains an olefin-based polymer and a cinnamoyl derivative. The olefin-based polymer can be an ethylene-based polymer or a propylene-based polymer. As used herein, "cinnamoyl derivative" is a compound derived from cinnamic acid. Cinnamic acid has the structure (I) shown below.

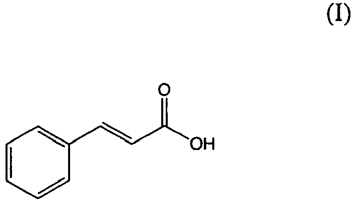

The cinnamoyl derivative may be formed from cinnamic acid as is commonly known in the art. A nonlimiting process to prepare the cinnamoyl derivative is by way of esterification. The cinnamoyl derivative has the formula (II): 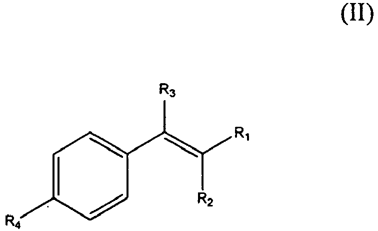 wherein, R₁ is a carboxyl group, an ester group, a cyano group, or an imidazolyl group,
R₂ is hydrogen or a cyano group,
R₃ is hydrogen or an alkyl group, and
R₄ is hydrogen or a C₁-C₁₀ alkoxy group.

In an embodiment, R₁ is an ester group. The ester group of R₁ contains C₂-C₁₀ carbons and is linear or branched. Nonlimiting examples of suitable cinnamoyl derivatives are provided in Table 1 on the following page.

**TABLE 1**

| Cinnamoyl Derivative | Structure | CAS # |
|---|---|---|
| Ethyl trans-Cinnamate | 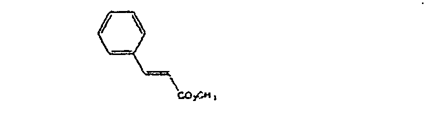 | 103-36-6 |
| Cinnamonitrile | 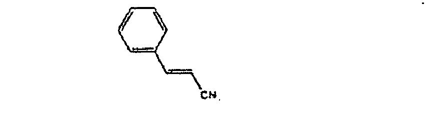 | 1885-38-7 |
| Ethyl trans-4-Ethoxycinnamate | 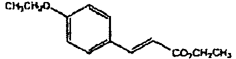 | 1504-69-4 |
| 2-Ethylhexyl trans-4-Methoxycinnamate | 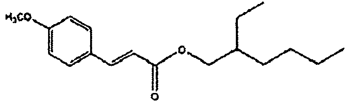 | 83834-59-7 |
| 1-trans-Cinnamoylimidazole | 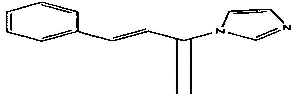 | 1138-15-4 |
| Ethyl trans-α-Cyanocinnamate | 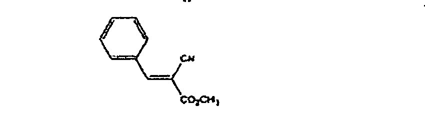 | 2169-69-9 |
| Ethyl 2-Cyano-3-phenyl-2-butenoate | 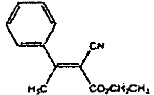 | 18300-89-5 |

In an embodiment, the cinnamoyl derivative contains no heterocyclic component.

In an embodiment, the cinnamoyl derivative is ethyl trans-cinnamate.

In an embodiment, the cinnamoyl derivative is ethyl trans-4-ethoxycinnamate.

The olefin-based polymer can be a propylene-based polymer or an ethylene-based polymer. In an embodiment, the olefin-based polymer is a propylene-based polymer. Suitable propylene-based polymers include propylene homopolymers, propylene interpolymers. The polypropylene homopolymer can be isotactic, syndiotactic or atactic polypropylene. The propylene interpolymer can be a random or block copolymer, or a propylene-based terpolymer. Reactor copolymers of polypropylene may also be used.

Suitable comonomers for polymerizing with propylene include ethylene, 1-butene, 1-pentene, 1-hexene, 1-heptene, 1-octene, 1-nonene, 1-decene, 1-undecene, 1-dodecene, as well as 4-methyl-1-pentene, 4-methyl-1-hexene, 5-methyl-1-hexene, vinylcyclohexane, and styrene. In an embodiment, the comonomers include ethylene, 1-butene, 1-hexene, and 1-octene.

Optionally, the propylene-based polymer may comprise monomers having at least two double bonds, which are preferably dienes or trienes. Suitable diene and triene comonomers include 7-methyl-1,6-octadiene; 3,7-dimethyl-1,6-octadiene; 5,7- dimethyl-1,6-octadiene; 3,7,11-trimethyl-1,6,10-octatriene; 6-methyl-1,5-heptadiene; 1,3-butadiene; 1,6-heptadiene; 1,7-octadiene; 1,8-nonadiene; 1,9-decadiene; 1,10-undecadiene; norbornene; tetracyclododecene; or mixtures thereof; butadiene; hexadienes; octadienes; 1,4-hexadiene; 1,9-decadiene; 4-methyl-1,4-hexadiene; 5-methyl-1,4-hexadiene; dicyclopentadiene; and 5-ethylidene-2-norbomene (ENB).

Additional unsaturated comonomers include 1,3-butadiene, 1,3-pentadiene, norbornadiene, and dicyclopentadiene; C₈₋₄₀ vinyl aromatic compounds including styrene, o-, m-, and p-methylstyrene, divinylbenzene, vinylbiphenyl, vinylnapthalene; and halogen-substituted C₈₋₄₀ vinyl aromatic compounds such as chlorostyrene and fluorostyrene

The propylene interpolymers of particular interest include propylene/ethylene, propylene/1-butene, propylene/1-hexene, propylene/4-methyl-1-pentene, propylene/1-octene, propylene/ethylene/1-butene, propylene/ethylene/ENB, propylene/ethylene/1-hexene, propylene/ethylene/1-octene, propylene/styrene, and propylene/ethylene/styrene, and preferably propylene/ethylene interpolymer. Suitable polypropylenes are formed as known in the art, for example, using single site catalysts (metallocene or constrained geometry) or Ziegler-Natta catalysts. The propylene and optional comonomers, such as ethylene, or alphaolefin monomers, are polymerized under conditions within the skill in the art, for instance, as disclosed by Galli, et al., Angew. Macromol. Chem., Vol. 120, 73 (1984), or by E.P. Moore, et al. in Polypropylene Handbook, Hanser Publishers, New York, 1996, particularly pages 11-98. Polypropylene polymers include Shell's KF 6100 homopolymer polypropylene; Solvay's KS 4005 polypropylene copolymer; Solvay's KS 300 polypropylene terpolymer; and INSPIRE™ polypropylene resins available from The Dow Chemical Company. Additional propylene-based interpolymers include those described in U.S. Provisional Patent Application No. 60/988,999 (filed November 19, 2007).

Propylene/α-olefin interpolymers, containing a majority weight percent polymerized propylene (based on total weight interpolymer), fall within the disclosure. Suitable polypropylene base polymers include VERSIFY™ polymers (The Dow Chemical Company) and VISTAMAXX™ polymers (ExxonMobil Chemical Co.), LICOCENE™ polymers (Clariant), EASTOFLEX™ polymers (Eastman Chemical Co.), REXTAC™ polymers (Hunstman), VESTOPLAST™ polymers (Degussa), PROFAX PF-611 AND PROFAX PF-814 (Montell).

In an embodiment, the propylene-based polymers include propylene, and typically, ethylene, and/or one or more unsaturated comonomers, and are characterized as having at least one, or more than one, of the following properties: (i) ¹³C NMR peaks corresponding to a regio-error at about 14.6 ppm and about 15.7 ppm, the peaks of about equal intensity, (ii) a skewness index, Sᵢₓ, greater than about -1.20, (iii) a DSC curve with a Tₘₑ that remains essentially the same, and a T_{Max} that decreases as the amount of comonomer (*i.e.,* units derived from ethylene and/or the unsaturated comonomer(s)) in the interpolymer is increased, and (iv) an X-ray diffraction pattern that reports more gamma-form crystals than a comparable interpolymer prepared with a Ziegler-Natta catalyst. In a further embodiment, the propylene-based interpolymer is a propylene/ethylene interpolymer.

In an embodiment, propylene-based polymers are the VERSIFY™ polymers available from The Dow Chemical Company. It is noted that in property (i), the distance between the two ¹³C NMR peaks is about 1.1 ppm. These propylene-based interpolymers are made using a nonmetallocene, metal-centered, heteroaryl ligand catalyst. Typically the interpolymers of this embodiment are characterized by at least one, or at least two, more or at least three, or all four, of these properties.

With respect to the X-ray property of subparagraph (iv) above, a "comparable" interpolymer is one having the same monomer composition within 10 weight percent, and the same Mw (weight average molecular weight) within 10 weight percent. For example, if an inventive propylene/ethylene/1-hexene interpolymer is 9 weight percent ethylene and 1 weight percent 1-hexene, and has a Mw of 250,000, then a comparable polymer would have from 8.1 to 9.9 weight percent ethylene, from 0.9 to 1.1 weight percent 1-hexene, and a Mw from 225,000 to 275,000, and prepared with a Ziegler-Natta catalyst.

The propylene-based interpolymers of this disclosure typically comprise units derived from propylene, in an amount of at least 60 weight percent, or at least 80 weight percent, or at least 85 weight percent of the interpolymer (based on total weight of polymerizable monomers). The typical amount of units derived from ethylene in propylene/ethylene interpolymers is at least 0.1 weight percent, or at least 1 weight percent, or at least 5 weight percent, and the maximum amount of units derived from ethylene present in these interpolymers is typically not in excess of 35 weight percent, or not in excess of 20 weight percent or not in excess of 10 weight percent of the interpolymer (based on total weight of polymerizable monomers). The amount of units derived from additional unsaturated comonomer(s), if present, is typically at least 0.01, or at least 1 weight percent, or at least 5 weight percent, and the typical maximum amount of units derived from the additional unsaturated comonomer(s) typically does not exceed 35 weight percent, or it does not exceed 30 weight percent and more or it does not exceed 20 weight percent of the interpolymer (based on total weight of polymerizable monomers). The combined total of units derived from ethylene and any unsaturated comonomer typically does not exceed 40 weight percent, or it does not exceed 30 or it does not exceed 20 weight percent of the interpolymer (based on the total weight of polymerizable monomers).

In an embodiment, the propylene-based interpolymer is an interpolymer of propylene, ethylene and, optionally, one or more unsaturated comonomers, for example, C₄-C₂₀ α-olefins, C₄-C₂₀ dienes, and vinyl aromatic compounds (example, styrene). These interpolymers are characterized as comprising at least 60 weight percent of units derived from propylene, from 0.1 to 35 weight percent of units derived from ethylene, and from 0 to 35 weight percent of units derived from one or more unsaturated comonomers, with the proviso that the combined weight percent of units derived from ethylene and the unsaturated comonomer(s) does not exceed 40 weight percent (based on total weight of polymerizable monomers).

In another embodiment, propylene-based interpolymer comprises units derived from propylene and one or more unsaturated comonomers. These interpolymers are characterized in having at least 60 weight percent of the units derived from propylene, and from 0.1 to 40 weight percent of the units derived from the unsaturated comonomer(s). Weight percentages are based on total weight of polymerizable monomers.

The unsaturated comonomers used in the practice of this disclosure include, C₄-C₂₀ α-olefins, especially C₄-C₁₂ α-olefins such as 1-butene, 1-pentene, 1-hexene, 4-methyl-1-pentene, 1-heptene, 1-octene, 1-decene and 1-dodecene; C₄-C₂₀ diolefins, such as 1,3-butadiene, 1,3-pentadiene, norbomadiene, 5-ethylidene-2- norbornene (ENB) and dicyclopentadiene; C₈-₄₀ vinyl aromatic compounds including styrene, o-, m-, and p-methylstyrene, divinylbenzene, vinylbiphenyl, vinylnapthalene; and halogen-substituted C₈-₄₀ vinyl aromatic compounds such as chlorostyrene and fluorostyrene.

In one embodiment, the propylene-based interpolymer has a melt flow rate (MFR) greater than, or equal to, 0.1, or greater than, or equal to 0.2, or greater than, or equal to 0.5 g/10 min. In another embodiment, the propylene-based interpolymer has a melt flow rate (MFR) less than, or equal to, 100, or less than, or equal to 50, or less than, or equal to 20 g/10 min. The MFR is measured according to ASTM D-1238 (2.16 kg, 230°C). In another embodiment, the propylene-based interpolymer is a propylene/thylene interpolymer. In a further embodiment, the ethylene content of the interpolymer ranges from 0.1 to 30 weight percent, or from 0.5 to 25 weight percent, or from 1 to 10 weight percent, based on the total weight of polymerizable monomers.

In another embodiment, the propylene-based interpolymer has a melt flow rate (MFR) from 0.1 to 100 g/10 min, or from 0.5 to 50 g/10 min, or from 1 to 10 g/10 min. All individual values and subranges from 0.1 to 100 g/10 min, are included herein and disclosed herein. The MFR is measured according to ASTM D-1238 (2.16 kg, 230°C).

In another embodiment, the propylene-based interpolymer is a propylene/ethylene interpolymer. In a further embodiment, the ethylene content of the interpolymer ranges from 0.1 to 30 weight percent, or from 0.5 to 25 weight percent, or from 1 to 20 weight percent, based on the total weight of polymerizable monomers.

In another embodiment, the propylene-based interpolymer has a density less than, or equal to, 0.90 g/cc, or less than, or equal to, 0.89 g/cc, or less than, or equal to, 0.88 g/cc. In another embodiment, the propylene-based interpolymer has a density greater than, or equal to, 0.83 g/cc, or greater than, or equal to, 0.84 g/cc, or greater than, or equal to, 0.85 g/cc. In an embodiment, the propylene-based interpolymer is a propylene/ethylene interpolymer. In a further embodiment, the ethylene content of the interpolymer ranges from 0.1 to 30 weight percent, or from 0.5 to 25 weight percent, or from 1 to 20 weight percent, based on the total weight of polymerizable monomers.

In another embodiment, the propylene-based interpolymer has a density from 0.83 g/cc to 0.90 g/cc, or from 0.84 g/cc to 0.89 g/cc, or from 0.85 g/cc to 0.88 g/cc. All individual values and subranges from 0.83 g/cc to 0.90 g/cc, are included herein and disclosed herein. In an embodiment, the propylene-based interpolymer is a propylene/ethylene interpolymer. In a further embodiment, the ethylene content of the interpolymer ranges from 0.1 to 30 weight percent, or from 0.5 to 25 weight percent, or from 1 to 20 weight percent, based on the total weight of polymerizable monomers.

In another embodiment, the propylene-based interpolymer has a molecular weight distribution less than, or equal to, 6, or less than, or equal to, 5.5, or less than, or equal to 5. In another embodiment, the molecular weight distribution is greater than, or equal to, 1.5, or greater than, or equal to, 2, or greater than, or equal to 2.5. In an embodiment, the propylene-based interpolymer is a propylene/ethylene interpolymer. In a further embodiment, the ethylene content of the interpolymer ranges from 0.1 to 30 weight percent, or from 0.5 to 25 weight percent, or from 1 to 20 weight percent, based on the total weight of polymerizable monomers.

In another embodiment, the propylene-based interpolymer has a molecular weight distribution from 1.5 to 6, or from 2.5 to 5.5, or from 3 to 5. All individual values and subranges from 1.5 to 6 are included herein and disclosed herein. In an embodiment, the propylene-based interpolymer is a propylene/ethylene interpolymer. In a further embodiment, the ethylene content of the interpolymer ranges from 0.1 to 30 weight percent, or from 0.5 to 25 weight percent, or from 1 to 20 weight percent, based on the total weight of polymerizable monomers.

As discussed above, the propylene-based interpolymers may be made using a metal-centered, heteroaryl ligand catalyst, in combination with one or more activators, for example, an alumoxane. In certain embodiments, the metal is one or more of hafnium and/or zirconium. More specifically, in certain embodiments of the catalyst, the use of a hafnium metal has been found to be preferred, as compared to a zirconium metal, for heteroaryl ligand catalysts. The catalysts, in certain embodiments, are compositions comprising the ligand and metal precursor, and, optionally, may additionally include an activator, combination of activators, or activator package.

The catalysts used to make the propylene-based interpolymers additionally include catalysts comprising ancillary ligand-hafnium complexes, ancillary ligand-zirconium complexes and optionally activators, which catalyze polymerization and copolymerization reactions, particularly with monomers that are olefins, diolefins or other unsaturated compounds. Zirconium complexes, hafnium complexes, compositions or compounds can be used. The metal-ligand complexes may be in a neutral or charged state. The ligand to metal ratio may also vary, the exact ratio being dependent on the nature of the ligand and metal-ligand complex. The metal-ligand complex or complexes may take different forms, for example, they may be monomeric, dimeric, or of an even higher order. Suitable catalyst structures and associated ligands are described in U.S. Patent 6,919,407.

In a further embodiment, the propylene-based polymer comprises at least 50 weight percent propylene (based on the total amount of polymerizable monomers) and at least 5 weight percent ethylene (based on the total amount of polymerizable monomer), and has ¹³C NMR peaks, corresponding to a regio-error, at about 14.6 ppm and about 15.7 ppm, and the peaks are of about equal intensity (for example, see U.S. Patent No. 6,919,407).

The propylene-based interpolymers can be made by any convenient process. In one embodiment, the process reagents, that is, (i) propylene, (ii) ethylene and/or one or more unsaturated comonomers, (iii) catalyst, and, (iv) optionally, solvent and/or a molecular weight regulator (e.g., hydrogen), are fed to a single reaction vessel of any suitable design, for example, stirred tank, loop, or fluidized-bed. The process reagents are contacted within the reaction vessel under appropriate conditions (for example, solution, slurry, gas phase, suspension, high pressure) to form the desired polymer, and then the output of the reactor is recovered for post-reaction processing. Suitable polymerization conditions are described in U.S. Patent 6,919,407.

The propylene-based polymers may have a combination of two or more suitable embodiments as described herein.

The propylene/α-olefin interpolymers may have a combination of two or more suitable embodiments as described herein.

The propylene/ethylene interpolymers may have a combination of two or more suitable embodiments as described herein.

In an embodiment, the composition includes a free radical initiator along with the olefin-based polymer and the cinnamoyl derivative. As used herein, a "free radical initiator" or "initiator" is a compound that when placed in contact with an olefin-based polymer, abstracts a hydrogen from the backbone of a polymer chain to form a polymer radical or polymer macroradical. There are several types of compounds that can initiate grafting reactions by decomposing to form free radicals, including azo-containing compounds, carboxylic peroxyacids and peroxyesters, alkyl hydroperoxides, and dialkyl and diacyl peroxides, among others. Many of these compounds and their properties have been described (Reference: J. Branderup, E. Immergut, E. Grulke, eds. "Polymer Handbook," 4th ed., Wiley, New York, 1999, Section II, pp. 1-76.).

In an embodiment, the species that is formed by the decomposition of the free radical initiator is an oxygen-based free radical. Nonlimiting examples of suitable oxygen-based free radicals include carboxylic peroxyesters, peroxyketals, dialkyl peroxides, and diacyl peroxides. Nonlimiting examples of suitable free radical initiators commonly used to modify the structure of polymers, are listed below. Also shown below, are the respective chemical structures and the theoretical radical yields. The theoretical radical yield is the theoretical number of free radicals that are generated per mole of initiator. For peroxide, this value is two radicals per peroxide functional group.

Nonlimiting examples of suitable free radical initiators are provided in Table 2 below.

**TABLE 2**

| **Initiator Name** | **Initiator Structure** | **Theoretical Radical Yield** |
|---|---|---|
| Benzoyl peroxide | 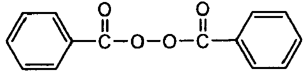 | 2 |
| Lauroyl peroxide | 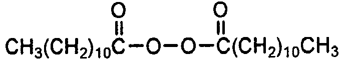 | 2 |
| Dicumyl peroxide | 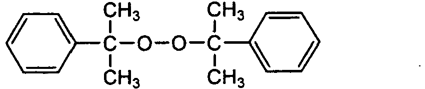 | 2 |
| Di-t-butyl peroxide | 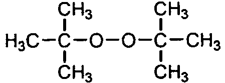 | 2 |
| Di-t-amyl peroxide | 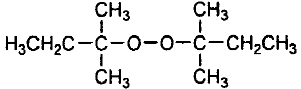 | 2 |
| t-Butyl peroxybenzoate | 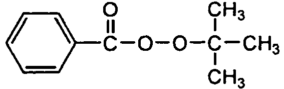 | 2 |
| t-Amyl peroxybenzoate | 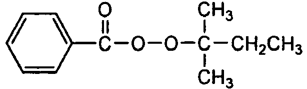 | 2 |
| 1,1-Bis(t-butylperoxy)-3,3,5-trimethylcyclohexane | 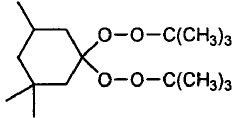 | 4 |
| α,α'-Bis(t-butylperoxy)-1,3-diisopropylbenzene | 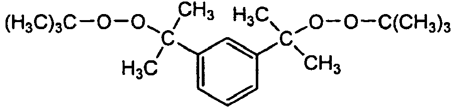 | 4 |
| α,α'-Bis(t-butylperoxy)-1,4-diisopropylbenzene | 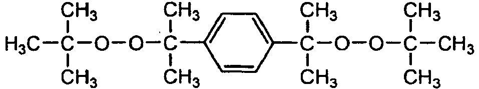 | 4 |
| 2,5-Bis(t-butylperoxy)-2,5-dimethylhexane | 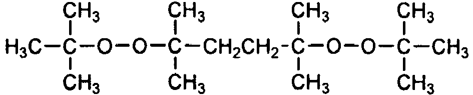 | 4 |
| 2,5-Bis(t-butylperoxy)-2,5-dimethyl-3-hexyne | 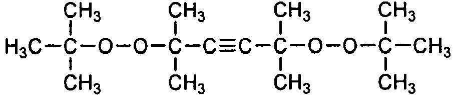 | 4 |

In an embodiment, the free radical initiator is LUPEROX® 101 [2,5-Bis(*tert-*butylperoxy)-2,5-dimethylhexane], available from Arkema, Inc., Philadelphia, PA.

In an embodiment, a composition is provided that includes a functional agent, the olefin-based polymer, the cinnamoyl derivative and the free radical initiator. As used herein, "grafting" or "grafted" is a reaction whereby a compound bonds or attaches onto a polymer backbone or polymer chain. The bond can be a covalent bond. The functional agent can be grafted directly or indirectly (by way of the coagent) to the polymer backbone. Once bonded to the polymer, the functional agent provides functionality to the polymer.

Nonlimiting examples of suitable functional moieties include carboxylic acid, ester, anhydride, primary amine, secondary amine, carboxyl, formyl, and hydroxyl. Nonlimiting examples of suitable functional agents include maleic anhydride, methacrylic acid, acrylic acid, glycidyl methacrylate, acrylamide, methacrylic acid, acrylic acid, glycidyl methacrylate, acrylamide, vinyltrialkoxysilanes, dibutyl maleate, dicyclohexyl maleate, diisobutyl maleate, dioctadecyl maleate, N-phenylmaleimide, citraconic anhydride, tetrahydrophthalic anhydride, bromomaleic anhydride, chloromaleic anhydride, nadic anhydride, methylnadic anhydride, alkenylsuccinic anhydride, maleic acid, fumaric acid, diethyl fumarate, itaconic acid, citraconic acid, crotonic acid, esters thereof, imides thereof, salts thereof, and Diels-Alder adducts thereof, and any combination of the foregoing.

It has been surprisingly discovered that provision of the present cinnamoyl derivative during the radical functionalization process inhibits, prevents, or reduces polymer degradation and/or molecular weight reduction in propylene-based polymers. (It is understood that radical functionalization of polyethylene yields crosslinking which increases molecular weight; provision of the present cinnamoyl derivative reduces, prevents, or inhibits molecular weight increase for radically functionalized ethylene-based polymers.) Not wishing to be bound by any particular theory, it is believed that polymer macroradicals are generated in the initial steps of the functionalization process. Thermolysis of the free radical initiator present in the composition abstracts the tertiary hydrogen on the olefin-based polymer leading to a polymer macroradical. In the case of a propylene-based polymer, the polymer macroradical will quickly lead to polypropylene degradation via a β-scission process, unless that polymer macroradical is intercepted/stabilized by some species, in such a way that has the effect of translocating the free radical initiator away from the polymer backbone, or the free radical initiator reacts with some other species to generate a product that terminates the radical chain via some means such as disproportionation or recombination. The present cinnamoyl derivative rapidly and efficiently reacts with the polymer macroradical. This promotes functionalization of the olefin-based polymer without degrading the molecular weight of the same.

It has been further surprisingly discovered that the present cinnamoyl derivative does not require the presence of maleic anhydride to inhibit polymer degradation during the radical functionalization process as is common with conventional degradation inhibiting agents. Accordingly, the present cinnamoyl derivative may be used with other functional agents beyond maleic anhydride. Such functional agents may or may not provide a synergistic effect to inhibit molecular weight degradation when combined with the cinnamoyl derivative.

In an embodiment, the composition includes a free radical initiator, the olefin-based polymer, and the cinnamoyl derivative. The free radical initiator can be any free radical initiator as previously disclosed herein. The free radical initiator is present in an amount to provide a molar ratio of the cinnamoyl derivative to the free radicals formed by the free radical initiator of from 0.5:1 to 5:1. In a further embodiment, the free radical initiator is LUPEROX® 101.

In an embodiment, the composition includes from 2 wt % to 10 wt %, or from 4 wt % to 8 wt %, or 6 wt % of the functional agent, based on the weight of the composition.

In an embodiment, the functional agent is maleic anhydride.

In another embodiment, the amount of maleic anhydride present in the composition is less than or equal to 10 phr (parts per hundred, based on the weight of the olefin-based polymer), or less than 5 phr, or from 0.5 phr to 10 phr, or from
0.5 phr to 5 phr. All individual values and subranges from 0.05 phr to 10 phr are included herein and disclosed herein.

In another embodiment, the amount of free radical initiator used in the functionalization reaction is less than, or equal to, 20 millimoles radicals per 100 grams propylene-based polymer, or less than or equal to 6 millimoles radicals per 100 grams propylene-based polymer, or less than or equal to 3 millimoles radicals per 100 grams propylene-based polymer. All individual values and subranges from 0.01 millimoles to 20 millimoles radicals per 100 grams propylene-based polymer are included herein and disclosed herein.

In an embodiment, another composition is provided which includes an olefin-based polymer and a cyano acrylate compound. The cyano-acrylate compound has the structure (III) below 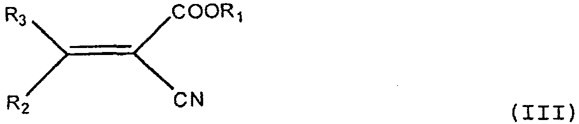 wherein R₁ is a C₁-C₂₀ alkyl group,
R₂ is hydrogen, an indolyl group, or a phenyl group, and
R₃ is hydrogen, or and a phenyl group. The phenyl group of R₂ and/or R₃ can be substituted or unsubstituted. In an embodiment, the phenyl group of R₂ and/or R₃ is substituted with a C₁-C₁₀ alkoxy group. Nonlimiting examples of suitable cyano-acrylate compositions are provided in Table 3 below.

**TABLE 3**

| Cyano-Acrylate Composition | Structure | CAS # |
|---|---|---|
| Ethyl trans-α-Cyano-3-indoleacrylate | 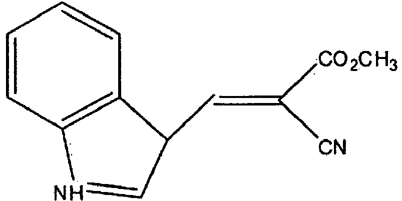 | 62309-96-0 |
| Ethyl 2-Cyano-3,3-diphenylacrylate | 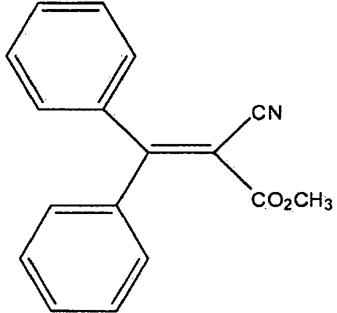 | 5232-99-5 |

In an embodiment, the cyano-acrylate compound is ethyl 2-cyano-3,3 diphenylacrylate.

In an embodiment, the cyano-acrylate compound is ethyl trans-α-cyano-3-indoleacrylate.

The olefin-based polymer can be any ethylene-based polymer or propylene-based polymer as previously discussed herein. In an embodiment, the olefin-based polymer is a propylene-based polymer.

In an embodiment, the composition includes a free radical initiator, the olefin-based polymer, and the cyano-acrylate composition. The free radical initiator can be any free radical initiator as previously disclosed herein. The free radical initiator is present in an amount to provide a molar ratio of the cyano-acrylate compound to the free radicals formed by the free radical initiator of from 0.5:1 to 5:1. In a further embodiment, the free radical initiator is LUPEROX^{®} 101.

In an embodiment, the composition includes a functional agent, the free radical initiator, the olefin-based polymer, and the cyano-acrylate composition. It has been surprisingly discovered that provision of the present cyano-acrylate compound during the radical functionalization process inhibits or reduces polymer degradation and/or minimizes molecular weight change (when used in conjunction with radical functionalization of ethylene-based polymers, the present cyano-acrylate compound reduces or minimizes molecular weight increase resulting from crosslinking.) It has been further surprisingly. discovered that the present cyano-acrylate compound does not require the presence of maleic anhydride to inhibit polymer degradation during the radical functionalization process. Not wishing to be bound by any particular theory, it is believed that the cyano-acrylate compound inhibits polymer degradation under similar, or substantially similar, principles discussed above with respect to the cinnamoyl derivative.

The functional agent can be any functional agent as previously disclosed herein. In a further embodiment, the composition includes from 2 wt % to 10 wt %, or from 4 wt % to 8 wt %, or 6 wt % of the functional agent, based on the weight of the composition. In yet another embodiment, the functional agent is maleic anhydride.

In an embodiment, a process for producing a functionalized olefin-based polymer is provided. The process includes mixing an olefin-based polymer, a free radical initiator, a functional agent, and a coagent to form a mixture. As used herein, a "coagent" is the cinnamoyl derivative and/or the cyano-acrylate compound. The process further includes forming polymer radicals with the free radical initiator, and grafting, with the coagent, the functional agent to the polymer radicals.

The functionalization process is performed under conditions that maximize grafts onto the polymer backbone, and minimize side reactions, such as the homopolymerization of the functional agent, which is not grafted to the propylene-based polymer, or the copolymerization of functional agent and coagents which are not grafted to the propylene-based polymer. The functionalization process can be a continuous or a discontinuous melt blending process and can take place in an extruder and/or a batch mixer. Alternatively, the functionalization process can occur by way of a solid state reaction. The reaction can occur under ambient environment or in an inert environment (*i.e.,* under a nitrogen gas blanket or a noble gas blanket).

In an embodiment, the melt blending process can be performed according to the following stages: introduction of the olefin-based polymer into the mixer; melting and mechanical mixing of the olefin-based polymer; introduction of the functional agent into the mixer; homogenization of the olefin-based polymer/functional agent mixture; introduction of the coagent into the mixture; introduction of the radical reaction initiator into the mixture; functional reaction of the olefin-based polymer; and (optional) introduction of a radical reaction inhibitor.

The melting and mixing of the olefin-based polymer can be considered complete when the torque transmitted by the rotor of the mixture is stabilized. The coagent and the functional agent are added to the olefin-based polymer and mixing proceeds to form a homogeneous mixture. The free radical initiator is introduced once homogenization of the mixture ingredients is complete. The free radical initiator is subsequently introduced and functionalization of the functional agent to the olefin-based polymer occurs.

In an embodiment, the coagent and the functional agent are both imbibed into the olefin-based polymer before the mixture is melt reacted. In a further embodiment, the composition is in the form of a dry blend during the imbibing process. In another embodiment, the imbibing occurs at room temperature.

In an embodiment, the overall residence time of the olefin-based polymer in the mixer is from 1 minute to 45 minutes. The process temperature is from 120°C to about 230°C. The mixer rotor has an angular velocity from 1 rpm to 100 rpm.

Decomposition of the free radical initiator into radicals occurs by way of thermolysis. The radicals extract hydrogen from the polymer backbone to form polymer macroradicals. In the case of propylene-based polymers, the presence of the coagent in the mixture prevents, inhibits, or otherwise reduces the occurrence of collateral scission reactions. Not wishing to be bound by any particular theory, it is believed that the coagent is nucleophilic and reacts more readily with the electrophilic polypropylene macroradical to disfavor the competing β-scission reaction. The functional agent bonds to the polymer macroradicals by way of the coagent to form the functionalized olefin-based polymer. In other words, the functional agent bonds to the coagent, with the coagent bonding to the polypropylene macromolecule.

In an embodiment, the highest occupied molecular orbital (HOMO) energy for the coagent is determined. Not wishing to be bound by any particular theory, it is believed that coagents with less negative HOMO energies will react more readily with the electrophilic polypropylene macromolecule to disfavor the competing β-scission reaction. Using the concept of the polypropylene macroradical's electrophilicity to react with unsaturated substrates, HOMO calculations of the unsaturated substrates can be used to identify coagent candidates. The HOMO energy, in units of electron volts (eV), can be used to assess the nucleophilicity of the unsaturated substrate. The more nucleophilic the unsaturated substrate, the less negative the HOMO energy, that is, the higher lying the HOMO.

The geometries and HOMO energies of the unsaturated substrates considered, were optimized using density functional theory (B3LYP) (see A.D, Becke, Phys. Rev. A 38, 3098 (1988); and C. Lee, W. Yang, R. G. Parr, Phys. Rev. B 37, 785 (1988)), and the 6-31G* basis set (see P.C. Hariharan and J.A. Pople, Chem. Phys. Lett. 66, 217 (1972)), contained in the SPARTAN molecular orbital program package, and IBM workstation and XP operating system (SPARTAN is a product of Wavefunction, Inc., 18401 Von Karman Avenue, Suite 370, Irvine, CA 92715; Spartan '04 Mechanics Program: (P6/X86); Spartan '04 Properties Program (P6/X86)).

For example, a HOMO calculation for N-vinylpyrrolidinone (60 electrons) provided the following results: a) the HOMO is molecular orbital (MO) #30; b) the corresponding eigenvalues of -0.21963 au and -5.97645 eV, are the HOMO energy in atomic units (au) and electron volts (eV), respectively (note: 1 au = 27.21 eV, and thus, -0.21963 au = -5.97645 eV).

The HOMO energies for the coagents disclosed herein are from -8 eV to -4 eV, or from -7 eV to -5 eV. Nonlimiting examples of potential coagents and respective HOMO values are set forth in Table 4 below.

**TABLE 4**

| Calculation of HOMO Energies for Cinnamoyl Coagents | |
|---|---|
| Potential Coagent | HOMO Calculation |
| Ethyl 2-Cyano-3-phenyl-2-butenoate | -6.86 eV |
| Ethyl trans-α-Cyanocinnamate | -6.77 eV |
| Cinnamonitrile | -6.60 eV |
| Ethyl 2-Cyano-3,3-diphenylacrylate | -6.48 eV |
| Ethyl trans-Cinnamate | -6.37 eV |
| Ethyl trans-α-Cyano-3-indoleacrylate | -5.91 eV |
| 2-Ethylhexyl trans-4-Methoxycinnamate | -5.82 eV |
| Ethyl trans-4-Ethoxycinnamate | -5.78 eV |

In an embodiment, a radical reaction inhibitor can be added to terminate the formation of polymer macroradicals. Nonlimiting examples of suitable radical reaction inhibitors include 3,5-di-tert-butyl-4 hydroxytoluene (BHT), Irganox 1010 and/or Irganox 1076.

In an embodiment, the functional agent is maleic anhydride. The method includes grafting the maleic anhydride to form a functionalized olefin-based polymer having from 0.01 wt % to 2.0 wt % maleic anhydride, or from 0.05 wt % to 1.5 wt %, or from 0.25 wt % to 1.5 wt % maleic anhydride, based on the total weight of the composition. The maleic anhydride grafted propylene-based polymer may or may not contain small amounts of hydrolysis product and/or other derivatives. The weight percent of maleic anhydride is determined by titration analysis, FTIR analysis, or any other appropriate method.

In an embodiment, a functionalized olefin-based polymer is provided. The olefin-based polymer can be an ethylene-based polymer or a propylene-based polymer. In one embodiment, the functionalized olefin-based polymer includes a propylene-based polymer chain, and a grafted coagent attached to the polymer chain. The coagent can be any cinnamoyl derivative and/or any cyano-acrylate compound previously disclosed. The grafted coagent is bonded to or is otherwise attached to the polymer chain.

In an embodiment, the grafted coagent is a grafted cinnamoyl derivative. The grafted cinnamoyl derivate has the structure (IV) below 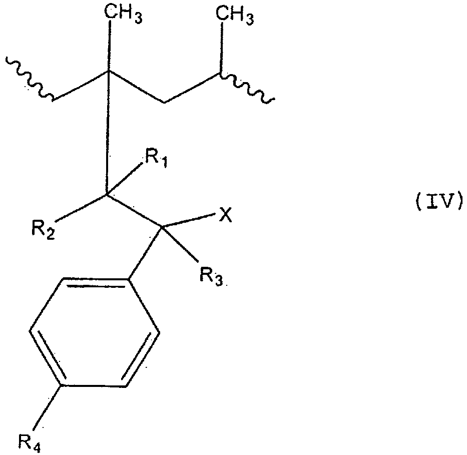 wherein R₁ is selected from a carboxyl group, an ester group and a cyano group.
R₂ is selected from hydrogen and a cyano group,
R₃ is selected from hydrogen and an alkyl group,
R₄ is selected from hydrogen and a C₁-C₁₀ alkoxy group, and
X is a functional agent.

The functional agent can be any functional agent disclosed herein. In an embodiment, the functional agent is selected from a carboxylic acid, an ester, an anhydride, a primary amine, a secondary amine, a carboxyl group, a formyl group, a hydroxyl group, and combinations thereof. In an embodiment, the functionalized olefin-based polymer includes from 0.1 wt % to 2.0 wt % of the functional agent, based on the total weight of the polymer.

In an embodiment, the functionalized olefin-based polymer with the grafted cinnamoyl derivative has an MFR from 30 g/10 min to 100 g/10 min (or any value or subrange therebetween), or from 40 g/10 min to 90 g/10 min, or from 42 g/10 min to 80 g/10 min, as measured in accordance with ASTM D-1238.

In an embodiment, the grafted Cinnamoyl derivative contains ethyl trans-4- ethoxycinnamate and/or ethyl trans-cinnamate.

In an embodiment, the functionalized olefin-based polymer contains from 0.5 wt % to 5.0 wt %, or from 1 wt % to 4 wt % of the grafted cinnamoyl derivative based on the weight of the functionalized olefin-based polymer.

In an embodiment, the functional agent is maleic anhydride. The functionalized olefin-based polymer has the structure (V) below.

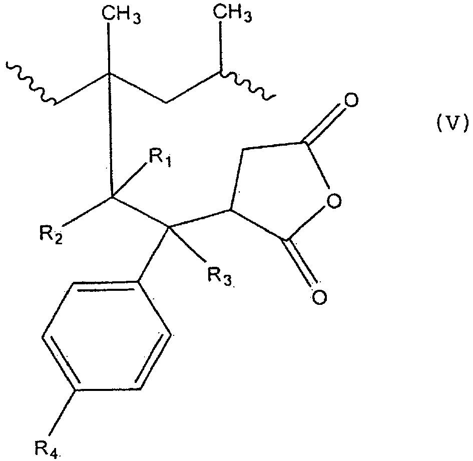

In an embodiment, the functionalized olefin-based polymer of structure (V) includes from 0.1 wt % to 2.0 wt % maleic anhydride based on the weight of the functionalized olefin-based polymer.

In an embodiment, the grafted coagent is a grafted cyano-acrylate compound. The grafted cyano-acrylate compound has the structure (VI) below. (VI) 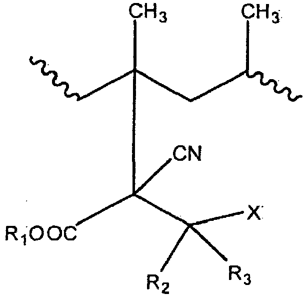
wherein R₁ is a C₁-C₂₀ alkyl group,
R₂ is selected from hydrogen, an indolyl group, and a phenyl group,
R₃ is selected from hydrogen, and a phenyl group, and
X is a functional agent. The phenyl group of R₂ and/or R₃ can be substituted or unsubstituted. In an embodiment, the phenyl group of R₂ and/or R₃ is substituted with a C₁-C₁₀ alkoxy group.

The functional agent can be any functional agent disclosed herein. In an embodiment, the functional agent is selected from a carboxylic acid, an ester, an anhydride, a primary amine, a secondary amine, a carboxyl group, a formyl group, a hydroxyl group, and combinations thereof. In an embodiment, the functionalized olefin-based polymer includes from 0.1 wt % to 2.0 wt % of the functional agent, based on the total weight of the functionalized olefin-based polymer.

In an embodiment, the functionalized olefin-based polymer with the grafted cyano-acrylate compound has a MFR from 30 g/10 min to 100 g/ 10 min, or from 60 g/10min to 90 g/10 min, or from 65 g/10 min to 85 g/10 min.

In an embodiment, the grafted cyano-acrylate compound includes ethyl 2-cyano-3,3 diphenylacrylate.

In an embodiment, the grafted cyano-acrylate compound includes ethyl trans-α-cyano-3-indoleacrylate.

In an embodiment, the functionalized olefin-based polymer contains from 0.5 wt % to 5.0 wt %, or from 1 wt % to 4 wt % of the grafted cyano-acrylate compound based on the weight of the functionalized olefin-based polymer.

In an embodiment, the functional agent is maleic anhydride. The functionalized olefin-based polymer has the structure (VII) below.

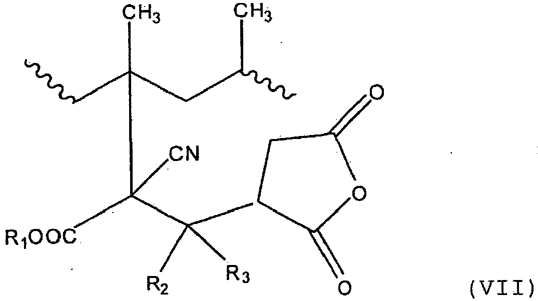

The functionalized olefin-based polymer includes from 0.1 wt % to 2.0 wt % maleic anhydride based on the weight of the functionalized olefin-based polymer.

Additional embodiments of the disclosure provide for propylene-based polymers grafted with other carbonyl-containing compounds. In an embodiment, these grafted propylene-based polymers may have molecular weight distributions and/or densities the same as, or similar to, those described above for the functionalized olefin-based polymers. In another embodiment, these grafted propylene-based polymers are prepared using the same or similar amounts of functional agent and peroxide as those used for the functionalized olefin- based polymers, as described above. In another embodiment, these grafted propylene-based polymers contain the same or similar levels of grafted compound as for the functionalized olefin-based polymers, as described above.

The disclosure also relates to methods of using the present functionalized polymers in applications requiring unique combinations of processing elements and unique physical properties in the final product. The disclosure also relates to objects, each composed of or comprising at least one component formed from the present functionalized olefin-based polymer, as discussed above. Articles include, but are not limited to, moldings, films (monolayer and/or multilayer, cast, tentered, blown-film), sheets (extruded or thermoformed), dispersons (both aqueous and non-aqueous) and foamed objects. These articles may be prepared by molding (injection molding, extrusion molding, slush molding, insert molding, blow molding, and/or roto-molding), thermoforming, extruding, or other processes. The present functionalized olefin-based polymers are useful in adhesives, tie layers, laminates, polymeric blends, and other end uses. The resulting products may be used in the manufacture of components for automobiles, such as profiles, bumpers and trim parts, or tires, or may be used in the manufacture of packaging materials, electric cable insulation (such as wire and cable coatings), coatings, geomembranes, and other applications. Additional articles include compounding formulations, compatibilizers, adhesives, films, powder coatings, laminates, dispersions, paints, coatings, paper reinforcing agents, composites, fibers, fabrics, fillers and other conventional thermoplastic articles of manufacture.

Additional objects include elastic films and fibers (stable fibers, tow, multicomponent, sheath/core, twisted, spin bonded, melt blown, monofilament); fabrics, soft touch goods, such as tooth brush handles and appliance handles; gaskets and profiles; adhesives (including hot melt adhesives and pressure sensitive adhesives); footwear components (including shoe soles and shoe liners); auto interior parts and profiles; foam goods (both open and closed cell); impact modifiers for other thermoplastic polymers, such as high density polyethylene, isotactic polypropylene, or other olefin polymers; coated fabrics; hoses; tubing; weather stripping; cap liners; flooring; and viscosity index modifiers, also known as pour point modifiers, for lubricants.

Thermoplastic compositions comprising the present functionalized olefin-based polymers, may include blends with other natural or synthetic polymers, additives, reinforcing agents, ignition resistant additives, antioxidants, stabilizers, colorants, extenders, crosslinkers, blowing agents, and/or plasticizers.

In an embodiment, the present functionalized olefin-based polymers include one or more additives and/or adjuvants. Suitable nonlimiting additives include fillers, such as organic or inorganic particles, including clays, talc, starch, calcium carbonate, glass fibers, polymeric fibers (including nylon, rayon, cotton, polyester, and polyaramide), metal fibers, flakes or particles, expandable layered silicates, phosphates or carbonates, such as clays, mica, silica, alumina, aluminosilicates or aluminophosphates, carbon whiskers, carbon fibers, nonoparticles including nanotubes, wollastonite, graphite, zeolites, and ceramics, such as silicon carbide, silane-based coupling agents, silicon nitride or titanias, titanium dioxide, zeolites, powdered metals, organic or inorganic fibers, including carbon fibers, silicon nitride fibers, steel wire or mesh, and nylon or polyester cording, nano-sized particles, clays, carbon black, and so forth; tackifiers; waxes; fatty acid salts; glycols; oil extenders, including paraffinic or napthelenic oils; and other natural and synthetic polymers, including other polymers according to the disclosure. Further nonlimiting additives include anti-oxidants, anti-ozonants, UV stabilizers, (such as hindered amine light stabilizers (HALS)), crosslinking agents, accelerators, cure activators, and vulcanization retarder.

Suitable polymers for blending with the present functionalized olefin-based polymers include thermoplastic and non-thermoplastic polymers, including natural and synthetic polymers. Exemplary polymers for blending include polypropylene, (both impact modifying polypropylene, isotactic polypropylene, atactic polypropylene, and random ethylene/propylene copolymers), various types of polyethylene (PE), including high pressure, free-radical Low Density Polyethylene (LDPE), Ziegler Natta Linear Low Density Polyethylene (LLDPE), metallocene PE, including multiple reactor PE ("in reactor" blends of Ziegler-Natta PE and metallocene PE, such as products disclosed in U.S. Patents 6,545,088, 6,538,070, 6,566,446, 5,844,045, 5,869,575, and 6,448,341, ethylene-vinyl acetate (EVA), ethylene/vinyl alcohol copolymers, polystyrene, impact modified polystyrene, acrylonitrile-butadiene-styrene (ABS), styrene/butadiene block copolymers and hydrogenated derivatives thereof (SBS and SEBS), and thermoplastic polyurethanes. Homogeneous polymers, such as olefin plastomers and elastomers, ethylene and propylene-based copolymers (for example polymers available under the trade designation VERSIFY™, available from The Dow Chemical Company, and VISTAMAXX™, available from ExxonMobil, can also be useful as components in blends comprising the functionalized interpolymers.

Additional polymers for blending include, but are not limited to, thermoplastic vulcanizites, styrenic polymer blends, polyamides, polyesters, polycarbonate, other engineering thermoplastics, polyvinyl alcohol, polyvinylidene chloride, polyvinyl chloride, and natural products, such as cellulose and wool fibers. Suitable polyamides include, but are not limited to, aliphatic polyamides, such as polycaprolactam (nylon 6), poly(hexamethylene adipamide) (nylon 6,6), poly(hexamethylene sebacamide); and aromatic polyamides (or polyaramides). Suitable polyesters include, but are not limited to, poly(ethylene terephthalate) (PET) and poly(butylene terephthalate) (PBT). Thermoset systems such as epoxies and unsaturated polyesters, may have the functionalized multi-block polymers blended into them prior to curing or during the curing of the thermoset system.

In one embodiment, the present disclosure provides thermoplastic compositions, comprising a thermoplastic matrix polymer, especially a polyamide, polyester or a olefin-based polymer , such as polypropylene, and a dispersed phase, containing a core-shell or core-multiple shell morphology. The shell comprising a functionalized multi-block interpolymer according to the disclosure, and the core comprising the multi-block unfunctionalized interpolymer and/or other types of olefin-based polymers.

The functionalized propylene-based polymer may also form inner core-shell type particles having hard crystalline or semi-crystalline blocks in the form of a "core," surrounded by soft or elastomeric blocks, forming a "shell" around the occluded domains of hard polymer. These particles may be formed and dispersed within the matrix polymer by the forces incurred during melt compounding or blending.

This desired core-shell or core-multiple shell morphologies may result from, or be enhanced by, chemical interactions between the functionalized moiety of the propylene-based polymer and the matrix resin. These chemical interactions may result in covalent bonds or noncovalent associations. For example, maleic anhydride grafts can form amide linkages with terminal amines of a polyamide, or form ester linkages with terminal hydroxyls of a polyester. The chemical interactions may also arise from enhanced associations between the functional groups of the functionalized propylene-based polymer and chemical moieties in the matrix polymer. Such associations include, but are not limited to, dipole-dipole interactions, hydrogen bonding, hydrophilic interactions and hydrophobic interactions.

Blends, as described herein, may be prepared by mixing or kneading the respective components at a temperature around, or above, the melt point temperature of one or both of the components. For some functionalized propylene-based polymers, this temperature may be above 90°C, or above 100°C, or above 110°C. Typical polymer mixing or kneading equipment, capable of reaching the desired temperatures and capable of melt plastifying the mixture, may be employed. These include mills, kneaders, extruders (both single screw and twin-screw), Banbury mixers and calenders. The sequence of mixing, and method, may depend on the final composition. A combination of Banbury batch mixers and continuous mixers may also be employed, such as a Banbury mixer, followed by a mill mixer, followed by an extruder.

When the functionalized olefin-based polymer containing composition is at least partially crosslinked, the degree of crosslinking may be measured by dissolving the composition in a solvent for specified duration, and calculating the percent gel or unextractable component. The percent gel normally increases with increasing crosslinking levels. For cured articles according to the disclosure, the percent gel content is desirably in the range from 5 to 100 percent.

The functionalized propylene-based polymers of the present disclosure, as well as blends thereof, may possess improved physical properties and lower cost as compared to prior art compositions, due to preservation of molecular weight via the use of less expensive cinnamate and acrylate functional coagents. Thus, the composition or blend may also have an improved surface appearance, especially when formed into a molded or extruded article. At the same time, the present compositions and blends thereof may also possess improved melt strength properties, thereby allowing the present functionalized multi-block copolymers and blends thereof, especially TPO blends, to be usefully employed in foam and thermoforming applications where melt strength is currently inadequate.

Thermoplastic compositions and thermoset compositions, each containing functionalized propylene-based polymer(s), according to the disclosure, may also contain any of the foregoing organic or inorganic fillers, and/or other additives.

### DEFINITIONS

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups. Unless stated to the contrary, implicit from the context, or customary in the art, all parts and percents are based on weight.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

The terms "functionalized olefin-based polymer," "functionalized propylene-based polymer," or "functionalized propylene/α-olefin interpolymer," and "functionalized propylene/ethylene interpolymer," and similar terms, as used herein, refer to the reaction product of a base polymer with one or more compounds, such as a functional agent, and/or a coagent.

The terms "blend" or "polymer blend," as used herein, is a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term "composition," as used herein, includes a mixture of materials which comprise the composition, as well as reaction products and decomposition products formed from the materials of the composition.

The term "polymer" is a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which usually refers to polymers prepared from two different types of monomers or comonomers, terpolymers (which usually refers to polymers prepared from three different types of monomers or comonomers), tetrapolymers (which usually refers to polymers prepared from four.different types of monomers or comonomers), and the like.

The term "interpolymer," as used herein, refers to polymers prepared by the polymerization of at least two different types of monomers. The generic term interpolymer thus includes copolymers, usually employed to refer to polymers prepared from two different monomers, and polymers prepared from more than two different types of monomers.

The term "olefin-based polymer" is a polymer containing, in polymerized form, a majority weight percent of an olefin, for example ethylene or propylene, based on the total weight of the polymer. Nonlimiting examples of olefin-based polymers include ethylene-based polymers and propylene-based polymers.

The term, "ethylene-based polymer," as used herein, refers to a polymer that comprises a majority weight percent polymerized ethylene monomer (based on the total weight of polymerizable monomers), and optionally may comprise at least one polymerized comonomer.

The term, "ethylene/α-olefin interpolymer," as used herein, refers to an interpolymer that comprises a majority weight percent polymerized ethylene monomer (based on the total amount of polymerizable monomers), and at least one polymerized α-olefin.

The term, "propylene-based polymer," as used herein, refers to a polymer that comprises a majority weight percent polymerized propylene monomer (based on the total amount of polymerizable monomers), and optionally may comprise at least one polymerized comonomer.

The term, "propylene/α-olefin interpolymer," as used herein, refers to an interpolymer that comprises a majority weight percent polymerized propylene monomer (based on the total amount of polymerizable monomers), and at least one polymerized α-olefin.

The term, "propylene/ethylene interpolymer," as used herein, refers to an interpolymer that comprises a majority weight percent polymerized propylene monomer (based on the total amount of polymerizable monomers), polymerized ethylene monomer (second predominant monomer), and, optionally, at least polymerized one α-olefin.

The term "heteroatom" refers to an atom other than carbon or hydrogen. Preferred heteroatoms include: F, Cl, Br, N, O, P, B, S, Si, Sb, Al, Sn, As, Se and Ge.

The terms, "hydrocarbyl" and "hydrocarbon" refer to substituents containing only hydrogen and carbon atoms, including branched or unbranched, saturated or unsaturated, cyclic, polycyclic or noncyclic species. Examples include alkyl-, cycloalkyl-, alkenyl-, alkadienyl-, cycloalkenyl-, cycloalkadienyl-, aryl-, and alkynyl- groups. "Substituted hydrocarbyl" and "substituted hydrocarbon" refer to a hydrocarbyl group that is substituted with one or more nonhydrocarbyl substituent groups. The terms, "heteroatom containing hydrocarbyl," "heterohydrocarbyl" and like terms refer to groups in which at least one atom other than hydrogen or carbon is present along with one or more carbon atom and one or more hydrogen atoms.

As used herein the term "aromatic" refers to a polyatomic, cyclic, conjugated ring system containing (4δ+2) π-electrons, wherein δ is an integer greater than or equal to 1. The term "fused" as used herein, with respect to a ring system containing two or more polyatomic, cyclic rings, means that with respect to at least two rings thereof, at least one pair of adjacent atoms is included in both rings. The term "aryl" refers to a monovalent aromatic substituent, which may be a single aromatic ring or multiple aromatic rings, which are fused together, linked covalently, or linked to a common group such as a methylene or ethylene moiety. Examples of aromatic ring(s) include phenyl, naphthyl, anthracenyl, and biphenyl, among others.

"Substituted aryl" refers to an aryl group in which one or more hydrogen atoms, bound to any carbon, is replaced by one or more functional groups, such as alkyl, substituted alkyl, cycloalkyl, substituted cycloalkyl, heterocycloalkyl, substituted heterocycloalkyl, halogen, alkylhalos (for example, CF₃), hydroxy, amino, phosphido, alkoxy, amino, thio, nitro, and both saturated and unsaturated cyclic hydrocarbons, which are fused to the aromatic ring(s), linked covalently or linked to a common group, such as a methylene or ethylene moiety. The common linking group may also be a carbonyl, as in benzophenone, or oxygen, as in diphenylether, or nitrogen, as in diphenylamine.

The term phenyl refers to the following structure

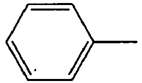

The term furyl refers to the following structure

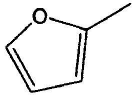

The term maleic anhydride refers to the following structure

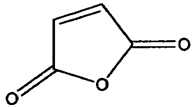

The term "grafted maleic anhydride" refers to a structure bonded to a polymer backbone and/or a grafted coagent, and which contains at least one chemical moiety as shown below, and may include hydrolyzed derivatives and other related structures

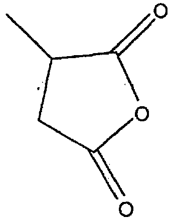

### TEST METHODS

Density is determined in accordance with American Society for Testing and Materials (ASTM) procedure ASTM D792-00, Method B.

Melt flow rate (MFR) in g/10 min for propylene-based polymers is measured using ASTM D-1238-04 condition 230°C/2.16kg. Melt index (12) in g/10 min for ethylene-based polymers is measured using ASTM D-1238-04, Condition 190°C/2.16kg.

Weight Percent Grafted Maleic Anhydride (titration) is determined via titration on products that have been dissolved in boiling xylene and re-precipitated in acetone in order to remove ungrafted maleic anhydride. The basic titration procedure for titration is described in U.S. Patent 6,884,850.

Weight Percent Grafted Maleic Anhydride (FT-IR) is determined by FT-IR on products that have been dissolved in hot xylene, precipitated from acetone, and dried overnight in a vacuum oven at 150°C. Infrared spectra are measured using films that are compression molded at 170°C for 30 seconds. After molding, the films are stored in a desiccator until the spectra are collected. The spectra were normalized for film thickness by setting the polypropylene absorbance at 1166 cm⁻¹ to 1.0. The anhydride absorbance at 1790 cm⁻¹ is used to determine the amount of maleic anhydride graft after a calibration curve using standards prepared by blending a known amount of octadecyl succinic anhydride into MFR 35 polypropylene has been established.

By way of example and not limitation, examples of the present disclosure will now be given.

### EXAMPLES

All materials are used as received from the supplier. VERSIFY™ DP2000, propylene/ethylene copolymer, density 0.886-0.890 g/cc, MFR 1.6-2.4 g/10 min (2.16 kg, 230°C, ASTM D-1238-04); Polypropylene homopolymer, MFR=4.0, density 0.9 g/cc (Aldrich); 2,5-Bis(tert-butylperoxy)-2,5-dimethylhexane, 90% (Aldrich LUPEROX™ 101); Maleic anhydride briquettes (Aldrich); Butyl 3-(2-furanyl) propenoate, Ethyl trans-cinnamate (Aldrich); Cinnamonitrile (Aldrich); Ethyl trans-4-ethoxycinnamate (Aldrich); 2-Ethylhexyl trans-4-methoxycinnamate (Aldrich); 1-trans-Cinnamoylimidazole (Alfa Aesar); Ethyl trans-α-cyanocinnamate (Aldrich); Ethyl trans-α-cyano-3-indoleacrylate (Aldrich); Ethyl 2-cyano-3-phenyl-2-butenoate (Aldrich); Ethyl 2-cyano-3,3-diphenylacrylate (Aldrich); Ethyl (ethoxymethylene)cyanoacetate (Aldrich); Allyl phenyl ether (Aldrich).

The maleic anhydride briquettes are ground to fine powder prior to use. Polyethylene dose bags of the ground maleic anhydride and solid coagents are prepared for loading to the Haake. The weight of the empty polyethylene bag is approximately 0.25 g. Liquid coagents and Aldrich LUPEROX™ 101 are added via syringe.

For the basic functionalization procedure the three zones of a ThermoHaake Rheomix (Haake), equipped with roller rotors and manual ram, are pre-warmed to 170°C and the torque is zeroed at 50 rpm. Polypropylene or VERSIFY™ DP2000 is added to the mixer with 10 rpm agitation. The agitator speed is increased stepwise over 2.0 minutes to 50 rpm. Material is fluxed for 1.0 minute before addition of the maleic anhydride. This mixture is fluxed for 2.0 minutes before the designated coagent is added. After mixing for 1.0 minute, LUPEROX™ 101 is then injected with a syringe. Material is mixed for an additional 12.5 minutes and then removed from the mixer.

For control samples, where maleic anhydride is not added to the resin, the mixing times were followed with coagent and peroxide added at the same time in the reaction sequence.

A portion of the material removed from the Haake is compression molded into a thin sheet at 190°C for 2 minutes and cut into strips for loading into the melt flow rate apparatus.

Samples for maleic anhydride titration and FTIR are reprecipitated to remove ungrafted maleic anhydride. Approximately 3 g of product is dissolved in 70 mL of boiling xylene. The polymer is precipitated by adding the hot xylene solution into 250 mL of acetone. The fibrous product is collected by filtration, washed with 50 mL of fresh acetone and dried overnight in a vacuum oven at 50°C. Functionalization results are determined by titration on these samples. Polymer samples for FTIR analysis are further dried in a vacuum oven at 150°C overnight to remove any residual maleic anhydride and to dehydrate any grafted material that may have hydrolyzed to the diacid form.

The succeeding tables describe the quantities and types of reagents utilized in the functionalization experiments. The mol% coagent, mmol R•/100g, and wt% MAH amounts reported are based on a 45 g charge of polymer.

**TABLE 5**

| Butyl 3-(-2-Furanyl) Propenoate as Coagent for Maleic Anhydride Functionalization on VERSIFY™ DP2000 | | | | | |
|---|---|---|---|---|---|
| **Coagent** | **Coagent, g (mol%, mmol)** | **LUPEROX 101, g (mmol R•/100 g, mmol R•)** | **Wt% MAH Feed (mmol)** | **Wt% MAH Graft** | **MFR, g/10 min** |
| None | NA | 0.1216 (3.3, 1.5) | 3.1 (14.4) | 0.59³ (0.52)¹ | 95.8 |
| Butyl 3-(2-Furanyl) Propenoate² | 0.4780 (0.23, 2.5) | 0.2567 (7.1,3.2) | None | NA | 23.7 |
| Butyl 3-(2-Furanyl) Propenoate | 0.4734 (0.23,2.4) | 0.2452 (6.7, 3,0) | None | NA | 5.8 |
| Butyl 3-(2-Furanyl) Propenoate | 0.6160 (0.30, 3.2) | 0.2446 (6.7,3.0) | None | NA | 8.2 |
| Butyl 3-(2-Furanyl) Propenoate | 0.7543 (0.36,3.9) | 0.2601 (7.2,3.2) | None | NA | 6.0 |
| Butyl 3-(2-Furanyl) Propenoate² | 0.4819 (0.23, 2.5) | 0.2442 (6.7,3.0) | 6.0 (29.4) | 0.49³ (0.45)¹ | 7.2 |
| Butyl 3-(2-Furanyl) Propenoate | 0.4838 (0.23,2.5) | 0.2332 (6.4, 2.9) | 6.1 (29.9) | 0.61³ (0.58)¹ | 9.9 |
| Butyl 3-(2-Furanyl) Propenoate | 0.5905 (0.28, 3.0) | 0.2593 (7.1, 3.2) | 6.1 (29.7) | 0.57³ | 8.3 |
| Butyl 3-(2-Furanyl) Propenoate | 0.7527 (0.36, 3.9) | 0.2511 (7.0, 3.1) | 6.0 (29.5) | 0.54³ | 6.6 |

| | | | | | |
|---|---|---|---|---|---|
| ¹ Maleic anhydride wt % measured by titration method. ² Reaction run with polypropylene homopolymer (MFR = 4.0, density = 0.9 g/cc). ³ Maleic anhydride wt % measured by FT-IR method. | | | | | |

**TABLE 6**

| Trisubstituted Cinnamoyl Derivatives as Coagents for Maleic Anhydride Functionalization on VERSIFY™ DP2000 | | | | | |
|---|---|---|---|---|---|
| Coagent | Coagent, g (mol%, mmol) | LUPEROX 101, g (mmol R•/100 g, mmol R•) | Wt% MAH Feed (mmol) | Wt% MAH Graft³ | MFR, g/10 min |
| Ethyl trans-α-Cyanocinnamate | 0.6430 (0.30, 3.2) | 0.2451 (6.8,3.0) | None | NA | 55.9 |
| Ethyl trans-α-Cyanocinnamate | 0.6050 (0.28, 3.0) | 0.2521 (6.9, 3.1) | 6.0 (29.3) | 0.75 | 78.5 |
| Ethyl trans-α-Cyanocinnamate | 0.7590 (0.35, 3.8) | 0.2413 (6.6,3.0) | 6.1 (29.5) | 0.69 | 68.1 |
| Ethyl trans-α-Cyano-3-indoleacrylate | 0.7190 (0.28,3.0) | 0.2486 (6.8, 3.1) | None | NA | 22.2 |
| Ethyl trans-α-Cyano-3-indoleacrylate | 0.7320 (0.29, 3.1) | 0.2589 (7.1, 3.2) | 6.1 (29.6) | 0.68 | 85.2 |
| Ethyl trans-α-Cyano-3-indoleacrylate | 0.9100 (0.35,3.8) | 0.2447 (6.7,3.0) | 6.0 (29.5) | 0.75 | 67.1 |

| | | | | | |
|---|---|---|---|---|---|
| ³ Maleic anhydride wt % measured by FT-IR method. | | | | | |

**TABLE 7**

| Tetrasubstituted Cinnamoyl Derivatives as Coagents for Maleic Anhydride Functionalization on VERSIFY™ DP2000 | | | | | |
|---|---|---|---|---|---|
| Coagent | Coagent, g (mol%, mmol) | LUPEROX 101, g (mmol R•/100 g, mmol R•) | Wt% MAH Feed (mmol) | Wt% MAH Graft³ | MFR, g/10 min |
| Ethyl 2-Cyano-3-phenyl-2-butenoate | 0.6537 (0.28, 3.0) | 0.2592 (7.1, 3.2) | None | NA | 58.6 |
| Ethyl 2-Cyano-3-phenyl-2-butenoate | 0.6338 (0.28, 2.9) | 0.2593 (7.1,3.2) | 6.0 (29.6) | 0.70 | 80.4 |
| Ethyl 2-Cyano-3-phenyl-2-butenoate | 0.8047 (0.35,3.7) | 0.2576 (7.1,3.2) | 6.0 (29.5) | 0.64 | 87.9 |
| Ethyl 2-Cyano-3,3-diphenylacrylate | 0.8400 (0.28,3.0) | 0.2564 (7.0,3.1) | None | NA | 225 |
| Ethyl 2-Cyano-3,3-diphenylacrylate | 0.8360 (0.28, 3.0) | 0.2560 (7.1,3.2) | 6.0 (29.3) | 0.68 | 82.6 |
| Ethyl 2-Cyano-3,3-diphenylacrylate | 1.0630 (0.36, 3.8) | 0.2281 (6.2, 2.8) | 6.0 (29.4) | 0.84 | 85.9 |

| | | | | | |
|---|---|---|---|---|---|
| ³ Maleic anhydride wt % measured by FT-IR method. | | | | | |

**TABLE 8**

| Disubstituted Cinnamoyl Derivatives as Coagents for Maleic Anhydride Functionalization on VERSIFY™ DP2000 | | | | | |
|---|---|---|---|---|---|
| Coagent | Coagent, g (mol%, mmol) | LUPEROX 101, g (mmol R•/100 g, mmol R•) | Wt% MAH Feed (mmol) | Wt% MAH Graft³ | MFR, g/10 min |
| Ethyl trans-Cinnamate | 0.5472 (0.29, 3.1) | 0.2555 (7.0,3.2) | None | NA | 44.7 |
| Ethyl trans-Cinnamate | 0.5320 (0.28, 3.0) | 0.2222 (6.1,2.8) | 6.0 (29.4) | 0.77 | 50.8 |
| Ethyl trans-Cinnamate | 0.6880 (0.37, 3.9) | 0.2485 (6.8, 3.1) | 6.1 (29.5) | 0.74 | 48.3 |
| Cinnamonitrile | 0.3858 (0.28, 3.0) | 0.2736 (7.5, 3.4) | None | NA | 59.3 |
| Cinnamonitrile | 0.3914 (0.28, 3.0) | 0.2446 (6.7,3.0) | 6.0 (29.2) | 0.74 | 59.7 |
| Cinnamonitrile | 0.5149 (0.37,4.0) | 0.2376 (6.5,2.9) | 6.0 (29.2) | 0.70 | 54.7 |
| Ethyl trans-4-Ethoxycinnamate | 0.6630 (0.28, 3.0) | 0.2558 (7.0,3.2) | None | NA | 59.4 |
| Ethyl trans-4-Ethoxycinnamate | 0.6680 (0.28,3.0) | 0.2463 (6.8, 3.1) | 6.1 (29.5) | 0.74 | 44.4 |
| Ethyl trans-4-Ethoxycinnamate | 0.8550 (0.36, 3.9) | 0.2425 (6.7,3.0) | 6.1 (29.8) | 0.92 | 43.7 |
| 2-Ethylhexyl trans-4-Methoxycinnamate | 0.9485 (0.31, 3.2) | 0.2515 (6.9, 3.1) | None | NA | 41.4 |
| 2-Ethylhexyl trans-4-Methoxycinnamate | 0.8666 (0.28, 2.9) | 0.2499 (6.8, 3.1) | 6.1 (29.7) | 0.73 | 64.1 |
| 2-Ethylhexyl trans-4-Methoxycinnamate | 1.0934 (0.35,3.7) | 0.2453 (6.8,3.0) | 6.0 (29.4) | 0.79 | 67.5 |
| 1-trans-Cinnamoylimidazole | 0.6130 (0.29, 3.1) | 0.2543 (7.0, 3.2) | None | NA | Product decomp |
| 1-trans-Cinnamoylimidazole | 0.5930 (0.28, 3.0) | 0.2400 (6.6,3.0) | 6.1 (29.8) | Product decomp | Product decomp |
| 1-trans-Cinnamoylimidazole | 0.7450 (0.35, 3.8) | 0.2444 (6.7,3.0) | 6.0 (29.4) | Product decomp | Product decomp |

| | | | | | |
|---|---|---|---|---|---|
| ³ Maleic anhydride wt % measured by FT-IR method. | | | | | |

The examples as shown in Tables 5-8 illustrate the use of coagents, namely cinnamoyl derivatives and cyano-acrylate compounds, during free radical maleation of polypropylene. Both classes of coagents allowed an approximate 0.7 wt% incorporation of maleic anhydride into the base polymer while limiting polypropylene degradation during the free radical maleation process. The effectiveness of the cinnamoyl reagents decreased as steric hindrance around the double bond and ester substituent increased. An electron donating group in the para position of the phenyl ring increases the effectiveness of the coagent for inhibiting free radical polymer degradation. Functionalized polypropylene containing 0.92 wt% maleic anhydride incorporation and having a melt-flow rate of 44 g/10 min, was obtained when ethyl 4-ethoxycinnamate was used as the coagent.

It is specifically intended that the present disclosure not be limited to the embodiments and illustrations contained herein, but include modified forms of those embodiments including portions of the embodiments and combinations of elements of different embodiments as come within the scope of the following claims.

## Claims

1. A composition comprising:
an olefin-based polymer;
a coagent comprising a cinnamoyl derivative of the
following structure 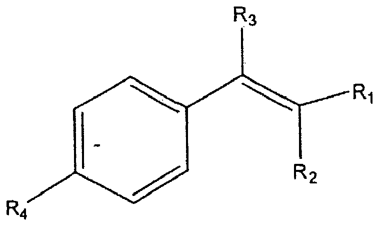
wherein R₁ is selected from the group consisting of a carboxyl group, an ester group, a cyano group and an imidazolyl group,
R₂ is selected from the group consisting of hydrogen and a cyano group,
R₃ is selected from the group consisting of hydrogen and an alkyl group, and
R₄ is selected from the group consisting of hydrogen and a C₁-C₁₀ alkoxy group;
and
at least one functional agent; and
a free radical initiator.

2. The composition of claim 1, comprising a coagent comprising a cinnamoyl derivative selected from the group consisting of ethyl trans-4-ethoxycinnamate and ethyl trans-cinnamate.

3. A composition comprising:
an olefin-based polymer;
a coagent comprising a cyano-acrylate compound having
the formula 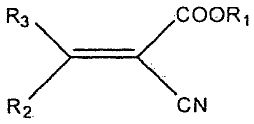
wherein R₁ is a C₁-C₂₀ alkyl group,
R₂ is selected from the group consisting of hydrogen, an indolyl group, and a phenyl group; and
R₃ is selected from the group consisting of hydrogen, and a phenyl group and
at least one functional agent; and
a free radical initiator.

4. The composition of any of claims 3, comprising a coagent comprising a cyano-acrylate compound selected from the group consisting of ethyl 2-cyano-3,3 diphenylacrylate and ethyl trans-α-cyano-3-indoleacrylate.

5. A functionalized olefin-based polymer comprising:
a propylene-based polymer chain; and
a grafted coagent comprising a cinnamoyl derivative attached to the polymer chain and having the structure 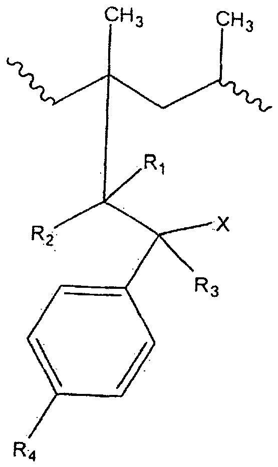
wherein R₁ is selected from the group consisting of a carboxyl group, an ester group and a cyano group,
R₂ is selected from the group consisting of hydrogen and a cyano group,
R₃ is selected from hydrogen and an alkyl group,
R₄ is selected from the group consisting of hydrogen and a C₁-C₁₀ alkoxy group,
and
X is a functional agent.

6. The functionalized olefin-based polymer of claim 5, wherein the functional agent is selected from the group consisting of a carboxylic acid, an ester, an anhydride, a primary amine, a secondary amine, a carboxyl group, a formyl group, a hydroxyl group, and combinations thereof.

7. The functionalized olefin-based polymer of any of claims 5-6, wherein the grafted coagent comprising a cinnamoyl derivative is selected from the group consisting of ethyl trans-4-ethoxycinnamate and ethyl trans-cinnamate.

8. The functionalized olefin-based polymer of any of claims 5-7 having the structure

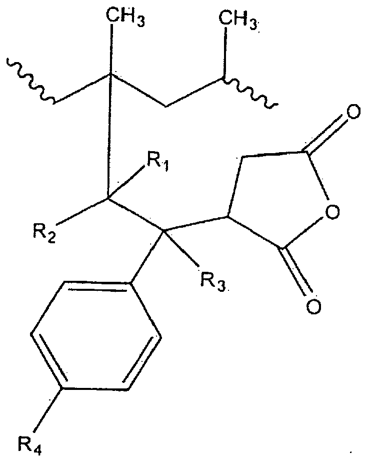

9. The functionalized olefin-based polymer of any of claims 5-8 comprising from 0.1 wt% to 2.0 wt% of the functional agent:

10. A functionalized olefin-based polymer comprising:
a propylene-based polymer chain; and
a grafted coagent comprising a cyano-acrylate compound attached to the chain having the formula 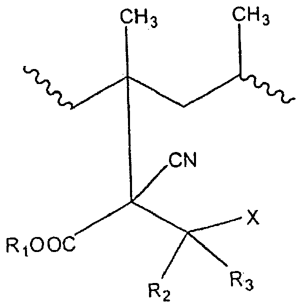
wherein R₁ is a C₁-C₂₀ alkyl group,
R₂ is selected from the group consisting of hydrogen, an indolyl group, and a phenyl group,
R₃ is selected from the group consisting of hydrogen, and a phenyl group, and X is a functional agent.

11. The functionalized olefin-based polymer of claim 10, wherein the functional agent is selected from the group consisting of a carboxylic acid, an ester, an anhydride, a primary amine, a secondary amine, a carboxyl group, a formyl group, a hydroxyl group, and combinations thereof.

12. The functionalized olefin-based polymer of any of claims 10-11, wherein the grafted coagent comprising a cyano-acrylate compound is selected from the group consisting of ethyl 2-cyano-3,3 diphenylacrylate and ethyl trans-α-cyano-3-indoleacrylate.

13. The functionalized olefin-based polymer of any of claims 10-12, having the structure

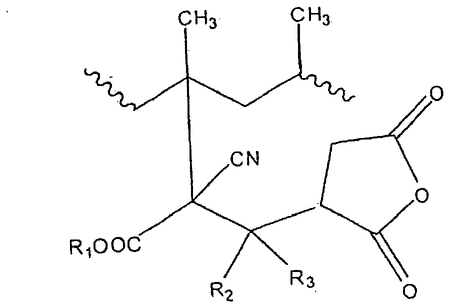

14. The functionalized olefin-based polymer of any of claims 10-13 comprising from 0.1 wt% to 2.0 wt% of the functional agent.

15. A process for producing a functionalized olefin-based polymer comprising:
mixing an olefin-based polymer, a free radical initiator, a functional agent, and a coagent selected from the group consisting of a cinnamoyl derivative and a cyano-acrylate composition;
forming polymer radicals from the olefin-based polymer with the free radical initiator; and
grafting, with the coagent, the functional agent to the polymer radicals.

## Patentansprüche

1. Eine Zusammensetzung, die Folgendes beinhaltet:
ein auf Olefin basierendes Polymer;
ein Coagens, das ein Cinnamoylderivat der folgenden Struktur beinhaltet: 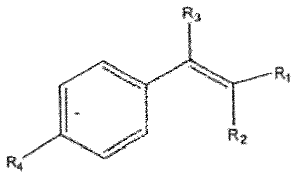 wobei R₁ aus der Gruppe, bestehend aus einer Carboxylgruppe, einer Estergruppe, einer Cyangruppe und einer Imidazolylgruppe, ausgewählt ist,
R₂ aus der Gruppe, bestehend aus Wasserstoff und einer Cyangruppe, ausgewählt ist,
R₃ aus der Gruppe, bestehend aus Wasserstoff und einer Alkylgruppe, ausgewählt ist, und
R₄ aus der Gruppe, bestehend aus Wasserstoff und einer C₁-C₁₀-Alkoxygruppe, ausgewählt ist;
und
mindestens ein funktionelles Agens; und
einen Initiator freier Radikale.

2. Zusammensetzung gemäß Anspruch 1, die ein Coagens beinhaltet, das ein Cinnamoylderivat, ausgewählt aus der Gruppe, bestehend aus Ethyl-trans-4-ethoxycinnamat und Ethyl-trans-cinnamat, beinhaltet.

3. Eine Zusammensetzung, die Folgendes beinhaltet:
ein auf Olefin basierendes Polymer;
ein Coagens, das eine Cyanacrylat-Verbindung mit der folgenden Formel beinhaltet: 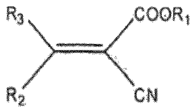 wobei R₁ eine C₁-C₂₀-Alkylgruppe ist,
R₂ aus der Gruppe, bestehend aus Wasserstoff, einer Indolylgruppe und einer Phenylgruppe, ausgewählt ist; und
R₃ aus der Gruppe, bestehend aus Wasserstoff und einer Phenylgruppe, ausgewählt ist, und
mindestens ein funktionelles Agens; und
einen Initiator freier Radikale.

4. Zusammensetzung gemäß einem der Ansprüche 3, die ein Coagens beinhaltet, das eine Cyanacrylat-Verbindung, ausgewählt aus der Gruppe, bestehend aus Ethyl-2-cyan-3,3-diphenylacrylat und Ethyl-trans-α-cyan-3-indoleacrylat, beinhaltet.

5. Ein funktionalisiertes, auf Olefin basierendes Polymer, das Folgendes beinhaltet:
eine auf Propylen basierende Polymerkette; und
ein aufgepfropftes Coagens, das ein an der Polymerkette angebrachtes Cinnamoylderivat beinhaltet und die folgende Struktur aufweist: 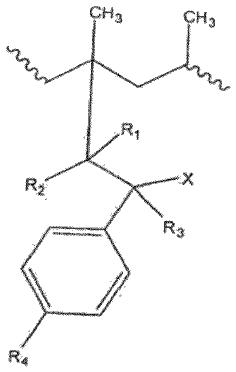 wobei R₁ aus der Gruppe, bestehend aus einer Carboxylgruppe, einer Estergruppe und einer Cyangruppe, ausgewählt ist,
R₂ aus der Gruppe, bestehend aus Wasserstoff und einer Cyangruppe, ausgewählt ist,
R₃ aus Wasserstoff und einer Alkylgruppe ausgewählt ist,
R₄ aus der Gruppe, bestehend aus Wasserstoff und einer C₁-C₁₀-Alkoxygruppe, ausgewählt ist,
und
X ein funktionelles Agens ist.

6. Funktionalisiertes auf Olefin basierendes Polymer gemäß Anspruch 5, wobei das funktionelle Agens aus der Gruppe, bestehend aus einer Carbonsäure, einem Ester, einem Anhydrid, einem primären Amin, einem sekundären Amin, einer Carboxylgruppe, einer Formylgruppe, einer Hydroxylgruppe und Kombinationen davon, ausgewählt ist.

7. Funktionalisiertes auf Olefin basierendes Polymer gemäß einem der Ansprüche 5-6, wobei das aufgepfropfte Coagens, das ein Cinnamoylderivat beinhaltet, aus der Gruppe ausgewählt ist, die aus Ethyl-trans-4-ethoxycinnamat und Ethyl-trans-cinnamat besteht.

8. Funktionalisiertes auf Olefin basierendes Polymer gemäß einem der Ansprüche 5-7, das die folgende Struktur aufweist:

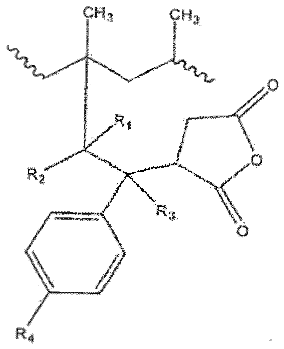

9. Funktionalisiertes auf Olefin basierendes Polymer gemäß einem der Ansprüche 5-8, das zu von 0,1 Gew.-% bis 2,0 Gew.-% das funktionelle Agens beinhaltet.

10. Funktionalisiertes auf Olefin basierendes Polymer, das Folgendes beinhaltet:
eine auf Propylen basierende Polymerkette; und
ein aufgepfropftes Coagens, das eine an der Kette angebrachte Cyanacrylat-Verbindung mit der folgenden Formel beinhaltet: 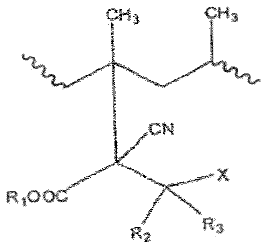 wobei R₁ eine C₁-C₂₀-Alkylgruppe ist,
R₂ aus der Gruppe, bestehend aus Wasserstoff, einer Indolylgruppe und einer Phenylgruppe, ausgewählt ist,
R₃ aus der Gruppe, bestehend aus Wasserstoff und einer Phenylgruppe, ausgewählt ist und X ein funktionelles Agens ist.

11. Funktionalisiertes auf Olefin basierendes Polymer gemäß Anspruch 10, wobei das funktionelle Agens aus der Gruppe, bestehend aus einer Carbonsäure, einem Ester, einem Anhydrid, einem primären Amin, einem sekundären Amin, einer Carboxylgruppe, einer Formylgruppe, einer Hydroxylgruppe und Kombinationen davon, ausgewählt ist.

12. Funktionalisiertes auf Olefin basierendes Polymer gemäß einem der Ansprüche 10-11, wobei das aufgepfropfte Coagens, das eine Cyanacrylat-Verbindung beinhaltet, aus der Gruppe ausgewählt ist, die aus Ethyl-2-cyan-3,3-diphenylacrylat und Ethyl-trans-α-cyan-3-indolacrylat besteht.

13. Funktionalisiertes auf Olefin basierendes Polymer gemäß einem der Ansprüche 10-12,
das die folgende Struktur aufweist

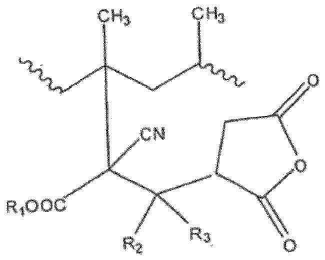

14. Funktionalisiertes auf Olefin basierendes Polymer gemäß einem der Ansprüche 10-13, das zu von 0,1 Gew.-% bis 2,0 Gew.-% das funktionelle Agens beinhaltet.

15. Ein Verfahren zum Herstellen eines funktionalisierten auf Olefin basierenden Polymers, das Folgendes beinhaltet:
Mischen eines auf Olefin basierenden Polymers, eines Initiators freier Radikale, eines funktionellen Agens und eines Coagens, ausgewählt aus der Gruppe, bestehend aus einem Cinnamoylderivat und einer Cyanacrylat Zusammensetzung;
Bilden von Polymerradikalen aus dem auf Olefin basierenden Polymer mit dem Initiator freier Radikale; und
Pfropfen, mit dem Coagens, des funktionellen Agens auf die Polymerradikale.

## Revendications

1. Une composition comprenant :
un polymère à base d'oléfine ;
un co-agent comprenant un dérivé de cinnamoyle de la structure suivante 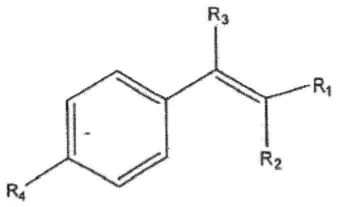
dans laquelle R₁ est sélectionné dans le groupe constitué d'un groupe carboxyle, d'un groupe ester, d'un groupe cyano et d'un groupe imidazolyle,
R₂ est sélectionné dans le groupe constitué d'hydrogène et d'un groupe cyano,
R₃ est sélectionné dans le groupe constitué d'hydrogène et d'un groupe alkyle, et
R₄ est sélectionné dans le groupe constitué d'hydrogène et d'un groupe alcoxy en C₁-C₁₀;
et
au moins un agent fonctionnel ; et
un initiateur de radicaux libres.

2. La composition de la revendication 1, comprenant un co-agent comprenant un dérivé de cinnamoyle sélectionné dans le groupe constitué de trans-4-éthoxycinnamate d'éthyle et de trans-cinnamate d'éthyle.

3. Une composition comprenant :
un polymère à base d'oléfine ;
un co-agent comprenant un composé cyano-acrylate ayant la formule 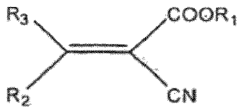
dans laquelle R₁ est un groupe alkyle en C₁-C₂₀,
R₂ est sélectionné dans le groupe constitué d'hydrogène, d'un groupe indolyle, et d'un groupe phényle ; et
R₃ est sélectionné dans le groupe constitué d'hydrogène, et d'un groupe phényle et
au moins un agent fonctionnel ; et
un initiateur de radicaux libres.

4. La composition de n'importe lesquelles des revendications 3, comprenant un co-agent comprenant un composé cyano-acrylate sélectionné dans le groupe constitué de 2-cyano-3,3 diphénylacrylate d'éthyle et de trans-α-cyano-3-indoleacrylate d'éthyle.

5. Un polymère à base d'oléfine fonctionnalisé comprenant :
une chaîne polymère à base de propylène ; et
un co-agent greffé comprenant un dérivé de cinnamoyle fixé à la chaîne polymère et
ayant la structure 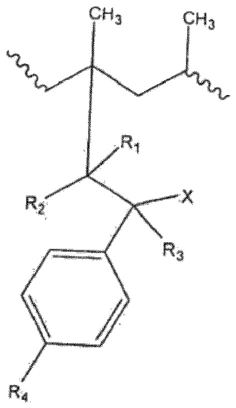
dans laquelle R₁ est sélectionné dans le groupe constitué d'un groupe carboxyle, d'un groupe ester et d'un groupe cyano,
R₂ est sélectionné dans le groupe constitué d'hydrogène et d'un groupe cyano,
R₃ est sélectionné parmi l'hydrogène et un groupe alkyle,
R₄ est sélectionné dans le groupe constitué d'hydrogène et d'un groupe alcoxy en C₁-C₁₀,
et
X est un agent fonctionnel.

6. Le polymère à base d'oléfine fonctionnalisé de la revendication 5, dans lequel l'agent fonctionnel est sélectionné dans le groupe constitué d'un acide carboxylique, d'un ester, d'un anhydride, d'une amine primaire, d'une amine secondaire, d'un groupe carboxyle, d'un groupe formyle, d'un groupe hydroxyle, et de combinaisons de ceux-ci.

7. Le polymère à base d'oléfine fonctionnalisé de n'importe lesquelles des revendications 5 à 6, dans lequel le co-agent greffé comprenant un dérivé de cinnamoyle est sélectionné dans le groupe constitué de trans-4-éthoxycinnamate d'éthyle et de trans-cinnamate d'éthyle.

8. Le polymère à base d'oléfine fonctionnalisé de n'importe lesquelles des revendications 5 à 7 ayant la structure

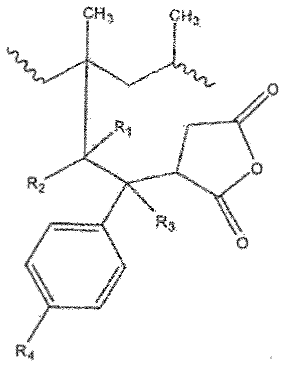

9. Le polymère à base d'oléfine fonctionnalisé de n'importe lesquelles des revendications 5 à 8 comprenant de 0,1 % en poids à 2,0 % en poids de l'agent fonctionnel.

10. Un polymère à base d'oléfine fonctionnalisé comprenant :
une chaîne polymère à base de propylène ; et
un co-agent greffé comprenant un composé cyano-acrylate attaché à la chaîne ayant la
formule 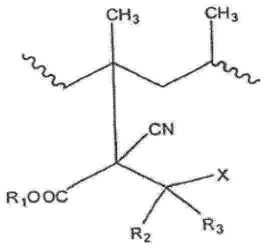
dans laquelle R₁ est un groupe alkyle en C₁-C₂₀,
R₂ est sélectionné dans le groupe constitué d'hydrogène, d'un groupe indolyle, et d'un groupe phényle,
R₃ est sélectionné dans le groupe constitué d'hydrogène, et d'un groupe phényle, et X est un agent fonctionnel.

11. Le polymère à base d'oléfine fonctionnalisé de la revendication 10, dans lequel l'agent fonctionnel est sélectionné dans le groupe constitué d'un acide carboxylique, d'un ester, d'un anhydride, d'une amine primaire, d'une amine secondaire, d'un groupe carboxyle, d'un groupe formyle, d'un groupe hydroxyle, et de combinaisons de ceux-ci.

12. Le polymère à base d'oléfine fonctionnalisé de n'importe lesquelles des revendications 10 à 11, dans lequel le co-agent greffé comprenant un composé cyano-acrylate est sélectionné dans le groupe constitué de 2-cyano-3,3 diphénylacrylate d'éthyle et de trans-α-cyano-3-indoleacrylate d'éthyle.

13. Le polymère à base d'oléfine fonctionnalisé de n'importe lesquelles des revendications 10 à 12, ayant la structure

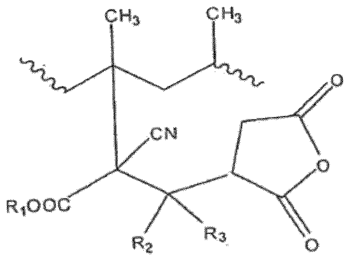

14. Le polymère à base d'oléfine fonctionnalisé de n'importe lesquelles des revendications 10 à 13 comprenant de 0,1 % en poids à 2,0 % en poids de l'agent fonctionnel.

15. Un procédé pour produire un polymère à base d'oléfine fonctionnalisé comprenant :
le fait de mélanger un polymère à base d'oléfine, un initiateur de radicaux libres, un agent fonctionnel, et un co-agent sélectionné dans le groupe constitué d'un dérivé de cinnamoyle et d'une composition cyano-acrylate ;
le fait de former des radicaux polymères à partir du polymère à base d'oléfine avec l'initiateur de radicaux libres ; et
le fait de greffer, avec le co-agent, l'agent fonctionnel aux radicaux polymères.
